# EUROPÄISCHE PATENTSCHRIFT

(11) **EP 3 445 603 B1**
(45) Veröffentlichungstag und Bekanntmachung des Hinweises auf die Patenterteilung: **08.12.2021**
(21) Anmeldenummer: 17715647.8
(22) Anmeldetag: 28.03.2017
(51) Int. Cl.: B60K 37/06, H04M 1/60

(54) **VERFAHREN UND VORRICHTUNGEN ZUM AUSWÄHLEN EINER FUNKTION EINES INFOTAINMENTSYSTEMS EINES KRAFTFAHRZEUGES**
METHODS AND APPARATUSES FOR SELECTING A FUNCTION OF AN INFOTAINMENT SYSTEM OF A MOTOR VEHICLE
PROCÉDÉ ET DISPOSITIFS DE SÉLECTION D'UNE FONCTION D'UN SYSTÈME D'INFO-DIVERTISSEMENT D'UN VÉHICULE AUTOMOBILE

(30) Priorität: 18.04.2016 DE 102016206513
(43) Veröffentlichungstag der Anmeldung: 27.02.2019
(73) Patentinhaber: Volkswagen Aktiengesellschaft, 38440 Wolfsburg (DE)
(72) Erfinder: LINDEMANN, Thorsten, 44328 Dortmund (DE); KÖHNKE, Axel, 48259 Dülmen (DE); TUBBESING, Stefan, 44866 Bochum (DE); PIETRUSCHKA, Hans-Udo, 45259 Essen (DE)
(86) Internationale Anmeldenummer: PCT/EP2017/057281
(87) Internationale Veröffentlichungsnummer: WO 2017/182236

(56) Entgegenhaltungen:
- WO-A2-2009/101163
- DE-A1-102009 056 203
- US-A1- 2015 012 826
- US-B1- 8 682 529

## Beschreibung

Die vorliegende Erfindung bezieht sich auf Verfahren und Vorrichtungen zum Auswählen einer Funktion eines Infotainmentsystems eines Kraftfahrzeuges.

In den vergangenen Jahren hat der Ausbau von informationstechnischen Systemen in Kraftfahrzeuges (Kfz) eine rasante Entwicklung erfahren und deutlich an marktwirtschaftlichem Potential gewonnen. Es ist abzusehen, dass sich dieser Trend in der kommenden Zeit fortsetzen wird. Kfz sind heutzutage häufig mit sogenannten Infotainmentsystemen ausgestattet, welche dem Nutzer des Kfz informations- und kommunikationstechnische Lösungen, wie zum Beispiel Navigation-, Telefonie- und Fahrassistenzfunktionen, aber auch unterhaltungselektronische Lösungen, wie Rundfunkempfang und Wiedergabe von Audiodaten, zur Verwendung anbieten.

Die zu beobachtende Entwicklung steht vor allem in Zusammenhang mit der zunehmenden, nahezu flächendeckenden Verbreitung von Smartphones, Tablet-Personalcomputern (Tablet-PCs), Laptops und weiterer mobiler elektronischer Endgeräte. Darüber werden gedruckte Medien, wie zum Beispiel Visitenkarten oder Poster, mit Schnelle-Antwort-Codes (englisch Quick-Response-Codes, kurz QR-Codes), Radiofrequenz-Identifikations-Etiketten (englisch Radio-Frequency-Identification, kurz RFID-Etiketten) oder Nahfeldkommunikationsetiketten (englisch Near-Field-Communication, kurz NFC-Etiketten) versehen, um eine Vernetzung mit elektronischen Endgeräten zu bewirken.

Da ein Nutzer eines Kfz oft über ein mobiles elektronisches Endgerät, insbesondere über ein Smartphone oder einen Tablet-PC, welche er im Alltag häufig auch außerhalb des Kfz nutzt, oder über gedruckte Medien, die zum Beispiel mit einem QR-Code oder einem NFC-Etikett versehen sind, verfügt, überträgt er im Kfz in vielen Situationen Daten aus dem mobilen Endgerät, dem NFC-Etikett oder dem QR-Code an das Infotainmentsystem, die dort gespeichert werden. Der Nutzer kann dann die übertragenen Daten mit dem Infotainmentsystem im Kfz vorteilhaft nutzen.

Häufig gestaltet sich jedoch die Verwendung der Daten auf dem Infotainmentsystem für den Nutzer als aufwendig oder kompliziert, insbesondere während der Fahrt, so dass er an die Daten gekoppelte Funktionen des Infotainmentsystems oft ganz oder teilweise nicht in Anspruch nehmen kann. Überdies sind in vielen Fällen Funktionen eines Infotainmentsystems, welche vom Nutzer übermittelte Daten weiterverarbeiten, für das Infotainmentsystem und für den Nutzer nicht effizient umgesetzt, das heißt, sie belegen unnötig Speicherplatz und erfordern eine Vielzahl an Interaktionen vom Nutzer.

Insbesondere wird auf die Dokumente US 8 682 529 B1 und US 2015/012826 A1 hingewiesen.

Daher besteht ein Bedarf, die bestehenden Verfahren und Vorrichtungen zur Nutzung von Funktionen von Infotainmentsystemen in Kfz zu verbessern. Diesem Bedarf wird durch die Verfahren und Vorrichtungen gemäß der unabhängigen Ansprüche Rechnung getragen. Ausführungsbeispiele dieser Erfindung können dies wie folgt erreichen: Es werden Daten, zum Beispiel Kontaktdaten, wie Telefonnummern oder Adressen, oder multimediale Daten, wie Audio- oder Videodaten, zu einem Infotainmentsystem übermittelt. Die Daten können dabei zum Beispiel von einem mobilen Endgerät, zum Beispiel einem Smartphone oder einem Tablet-PC, beispielsweise mittels NFC oder Bluetooth an das Infotainmentsystem gesendet worden sein. Auch kann das Infotainmentsystem die Daten zum Beispiel aus dem Internet, beispielsweise über eine Mobilfunkverbindung, heruntergeladen oder aus einem NFC-Etikett oder einem QR-Code ausgelesen haben. Nach Empfang der Daten am Infotainmentsystem prüft dieses, ob die übermittelten Daten einer seiner Funktionen, wie zum Beispiel einer Telefoniefunktion, einer Navigationsfunktion oder einer Wiedergabefunktion von Audio- beziehungsweise Videodaten, zugeordnet werden können. Ist dies der Fall, so bietet das Infotainmentsystem diejenigen Funktionen, denen die Daten zugeordnet werden können, über eine Ausgabeschnittstelle, zum Beispiel auf einem im Infotainmentsystem integrierten Display, einem Nutzer des Kfz zur Verwendung an.

Vorteilhaft hieran kann zum Beispiel sein, dass das Auswählen und damit die Nutzung der Funktionen des Infotainmentsystems für den Nutzer effizienter werden können. So können zum Beispiel weniger Bedienschritte am Infotainmentsystem für den Nutzer erforderlich sein, da die möglichen Funktionen dem Nutzer direkt zur Verwendung angeboten werden können.

Gemäß der Erfindung umfasst das Infotainmentsystem wenigstens zwei Betriebsmodi, wobei jeder Betriebsmodus wenigstens eine Funktion aufweist, welche dem Nutzer zur Verwendung angeboten werden kann. Werden dem Infotainmentsystem, während es sich in einem dieser bestimmten Betriebsmodi befindet oder nachdem für es ein bestimmter Betriebsmodus vom Hersteller oder vom Nutzer des Kfz als priorisierter vorbestimmt wurde, Daten übermittelt, so kann das Infotainmentsystem bevorzugt diejenigen Funktionen dem Nutzer zur Verwendung anbieten, welche der aktive beziehungsweise der vorbestimmte Betriebsmodus aufweist. Alternativ kann das Infotainmentsystem ausschließlich die Funktionen, welche der aktive beziehungsweise der vorbestimmte Betriebsmodus aufweist, dem Nutzer zur Verwendung anbieten.

Ferner können in einigen Ausführungsbeispielen aus den übermittelten Daten Informationen extrahiert werden. Die extrahierten Informationen können anschließend in Form von Parametern an die zur Verwendung anzubietenden Funktionen gekoppelt werden. Mit anderen Worten, mögliche Ausführungsbeispiele des Verfahrens bieten dem Nutzer nicht nur Funktionen zur Verwendung an, welchen die übermittelten Daten zugeordnet werden können, sondern welche zusätzlich die an das Infotainmentsystem übermittelten Daten weiterverarbeiten können. Dabei kann dem Nutzer diese Weiterverarbeitung der Daten gemeinsam mit den Funktionen angezeigt werden.

Dies kann neben einer weiteren Reduktion der Anzahl der Bedienschritte am Infotainmentsystem den Vorteil haben, dass das Infotainmentsystem nur die extrahierten Informationen speichern oder zwischenspeichern kann, welche zur Ausführung der Funktionen relevant sind, oder eine dauerhafte Speicherung gänzlich vermeiden kann, vor allem das Abspeichern in einem nichtflüchtigen Speicher, zum Beispiel in einem elektronischen Speichermedium, wie Electrically-Erasable-Programmable-Read-Only-Memory (englisch für Elektrisch-Löschbarer-Programmierbarer-Nur-Lese-Speicher, kurz EEPROM), Flash-EEPROM (englisch für Blitz-EEPROM) oder Halbleiterlaufwerke (englisch Solid-State-Drives, kurz SSD), in einem magnetischen Speichermedium, insbesondere Festplattenlaufwerke (englisch Hard Disc Drive, kurz HDD), oder in einem Nur-Lese-Speicher (englisch Read-Only-Memory, kurz ROM), wie Compact-Discs (CD) oder digitale, vielseitig verwendbare Discs (englisch für Digital-Versatile-Disc, kurz DVD). Dabei kann vorteilhaft sein, dass für die Daten benötigter Speicherplatz reduziert und der Speicher weniger Lese-, Schreib- und Löschoperationen ausgesetzt werden kann, so dass die Lebensdauer des Speichermediums verlängert werden kann. Dies ist gerade im Kfz-Bereich wichtig, da hier häufig elektronische Speichermedien, welche aufgrund eines Fehlens beweglicher Teile für einen Gebrauch im Kfz geeignet sind, aber vor allem durch Schreib- und Löschoperationen schnell altern können, eingesetzt werden. Durch eine ökonomischere Nutzung des Speichers können Wartungsintervalle verlängert werden.

In einigen Ausführungsbeispielen können die dem Nutzer zur Verwendung anzubietenden Funktionen in Form von diesen zugeordneten Texten und/oder visuellen Darstellungen auf einer Anzeigeeinrichtung des Infotainmentsystems, zum Beispiel auf einer Flüssigkristallanzeige (englisch Liquid-Crystal-Display, kurz LCD), dargestellt werden. Alternativ oder zusätzlich können sie durch Ausgabe von ihnen zugeordneter Sprache, zum Beispiel durch Ansagen von ihnen zugeordneten Namen und ihrer Parameter, über eine Spracherzeugungseinrichtung, zum Beispiel über Audioverstärker und Lautsprecher des Infotainmentsystems, dem Nutzer zur Verwendung angeboten werden.

Vorteilhaft an einem Ansagen der Funktionen kann zum Beispiel sein, dass ein Nutzer des Kfz, vor allem während der Fahrt, seine Aufmerksamkeit vornehmlich auf die Straße und den Verkehr richten kann. Umfasst das Infotainmentsystem zum Beispiel am Steuerrad des Kfz eine Bestätigungstaste, so kann der Nutzer die Funktion effizient durch Betätigen dieser Bestätigungstaste, zum Beispiel während sie genannt oder kurz nachdem sie genannt wurde, ausführen.

Das in einigen Ausführungsbeispielen durchgeführte bevorzugte Anbieten von Funktionen kann darin bestehen, dass dem Nutzer die bevorzugt anzubietenden Funktionen zum Beispiel innerhalb einer auf einem Display des Infotainmentsystems dargestellten Liste zuerst angezeigt werden und/oder in dieser Liste bereits markiert sind, so dass der Nutzer lediglich durch eine Bestätigung, zum Beispiel durch Drücken einer Bestätigungstaste einer dem Infotainmentsystem zugeordneten Eingabeeinrichtung, eine bevorzugt angebotene Funktion ausführen kann. Nicht bevorzugt angebotene Funktionen werden an späteren Positionen der Liste hinter beziehungsweise unter den bevorzugt anzubietenden Funktionen aufgeführt und/oder sind unmarkiert.

Werden Funktionen dem Nutzer über eine Ansage durch eine Spracherzeugungseinrichtung angeboten, so kann das bevorzugte Anbieten dadurch erfolgen, dass bevorzugt anzubietende Funktionen zeitlich zuerst genannt werden. Funktionen, die zur Verwendung anzubieten sind, allerdings nicht bevorzugt, können zeitlich nach den bevorzugt anzubietenden Funktionen genannt werden.

Vorteilhaft an einem bevorzugten Anbieten von Funktionen kann sein, dass die Zahl der Interaktionen zwischen dem Nutzer und dem Infotainmentsystem reduziert werden kann. Dadurch kann zum Beispiel der Vorgang, Funktionen des Infotainmentsystems auszuwählen und mit Parametern zu versehen, beschleunigt werden und das Infotainmentsystem die Funktionen zeitlich früher und damit vorteilhaft für den Nutzer ausführen.

Verlässt zum Beispiel der Nutzer mit dem Kfz einen Parkplatz und benötigt an einer Ausfahrt des Parkplatzes eine Navigation zu einem Fahrtziel, so kann es vorteilhaft sein, wenn die Auswahl und Einstellung der Navigationsfunktion, das heißt die Übernahme einer Adresse als Fahrtziel in die Navigation, schnell, idealerweise noch während er sich im Kfz zur Ausfahrt begibt, erfolgen kann, so dass bei Erreichen der Ausfahrt die Zielführung bereits gestartet sein und der Nutzer beziehungsweise der Fahrer Informationen zur Fahrtrichtung an der Ausfahrt erhalten kann. Dies kann eine effiziente Nutzung des Kfz ermöglichen.

Ein ausschließliches Anbieten von Funktionen, welche beim Übermitteln der Daten der aktive beziehungsweise der vorbestimmte Betriebsmodus aufweist, kann den Vorteil haben, dass der Nutzer nicht von einer Vielzahl möglicher Funktionen verwirrt wird und damit eine schnelle und sichere Auswahl dieser treffen kann.

In manchen Ausführungsbeispielen kann überdies das Infotainmentsystem dazu ausgebildet sein, häufig vom Nutzer verwendete Funktionen dem Nutzer bevorzugt beziehungsweise ausschließlich zur Verwendung anzubieten. Dies kann zum Beispiel darüber realisiert werden, dass das Infotainmentsystem eine Anzahl von Ausführungen seiner einzelnen Funktionen durch den Nutzer abspeichern kann und somit Funktionen mit einer gegenüber anderen Funktionen hohen Anzahl an Ausführungen als häufig vom Nutzer verwendete erkennen kann.

Zusätzlich kann das Infotainmentsystem in einigen Ausführungsformen so ausgebildet sein, dass der Nutzer konfigurieren kann, ob von ihm oder vom Hersteller vorbestimmte Funktionen und/oder häufig verwendete Funktionen bevorzugt beziehungsweise ausschließlich vom Infotainmentsystem zur Verwendung angeboten werden.

Vorzugsweise ist zumindest in einigen Ausführungsformen vorgesehen, dass, sofern die übermittelten Daten Kontaktdaten umfassen, wie zum Beispiel eine Adresse und/oder eine Telefonnummer, dem Nutzer vom Infotainmentsystem eine Navigation an die in den Kontaktdaten übermittelte Adresse beziehungsweise einen Telefonanruf eines der Telefonnummer zugeordneten Anschlusses als Funktion zur Verwendung angeboten wird. Vorteilhaft hieran kann zusätzlich sein, dass sich eine für den Nutzer aufwendige Eingabe der Adresse beziehungsweise der Telefonnummer erübrigt und er somit effizienter das Infotainmentsystem durch weniger Interaktionen nutzen kann. Darüber hinaus können damit Möglichkeiten fehlerhafter manueller Eingaben der Adresse beziehungsweise der Telefonnummer reduziert werden.

In ähnlicher Weise sieht die Erfindung in einer möglichen Ausführungsform als dem Nutzer zur Verwendung anzubietende Funktion eine Wiedergabe multimedialer Daten, insbesondere von Audio- und Videodaten, vor, sofern die übermittelten Daten multimediale Daten umfassen. Oft verfügt das Infotainmentsystem über eine hochwertige, leistungsstarke unterhaltungselektronische Ausstattung, welche in der beschriebenen Art und Weise effizient genutzt werden kann, wenn Daten zum Beispiel von einem mobilen Endgerät zum Infotainmentsystem übermittelt werden oder vom Infotainmentsystem zum Beispiel über eine Mobilfunkverbindung aus dem Internet oder von einer Datenbank, insbesondere aus einer Daten-Cloud, abgerufen werden.

Gemäß eines weiteren Aspektes der vorliegenden Erfindung schaffen Ausführungsbeispiele ein Verfahren zum Auswählen einer Funktion eines Infotainmentsystems eines Kfz. Dabei werden Daten an das Infotainmentsystem übermittelt. Das Infotainmentsystem überprüft, ob die übermittelten Daten einer seiner Funktionen zugeordnet werden können. Ist dies der Fall, so führt das Infotainmentsystem diese Funktion aus. Ein Vorteil hieran kann darin bestehen, dass nach Übermitteln der Daten ein Nutzer des Infotainmentsystems keine weiteren Bedienschritte an diesem vorzunehmen braucht.

Das Infotainmentsystem kann dabei aus den übermittelten Daten Informationen extrahieren und diese in Form von Parametern an die auszuführende Funktion koppeln. Werden zum Beispiel Daten, welche eine Telefonnummer enthalten, an das Infotainmentsystem übermittelt, so kann das Infotainmentsystem einen Telefonanruf eines der Telefonnummer zugeordneten Anschlusses ausführen.

Können die übermittelten Daten mehreren Funktionen zugeordnet werden, so kann das Infotainmentsystem so konfiguriert sein, dass es alle möglichen Funktionen oder nur eine oder mehrere vorbestimmte Funktionen ausschließlich ausführen kann. Enthalten an das Infotainmentsystem übermittelte Daten zum Beispiel eine Adresse und eine Telefonnummer und ist das Infotainmentsystem beispielsweise so konfiguriert, das es ausschließlich Navigationsfunktionen nach Übermittlung von Daten ausführen soll, so kann das Infotainmentsystem eine Zielführung an die Adresse ohne weitere Bedienschritte ausführen. Ein Telefonanruf wird nicht vom Infotainmentsystem ohne weitere Bedienschritte ausgeführt.

Gemäß eines weiteren Aspektes der vorliegenden Erfindung geben Ausführungsformen ein Infotainmentsystem für ein Kfz an. Das Infotainmentsystem umfasst dabei eine Kommunikationsschnittstelle, über welche Daten, zum Beispiel von einem mobilen Endgerät oder aus dem Internet, einem NFC-Etikett oder einem QR-Code, empfangen werden können. Besonders bevorzugt ist dabei eine drahtlose Kommunikationsschnittstelle, zum Beispiel eine Mobilfunkschnittstelle, eine Bluetooth-Schnittstelle, eine Schnittstelle für drahtlose lokale Netzwerke (englisch Wireless Local Area Networks, WLAN), eine Nahfeldkommunikationsschnittstelle oder eine optische Schnittstelle, wie zum Beispiel eine Video- oder Fotokamera oder ein Scanner, um zum Beispiel einen QR-Code einlesen zu können. In einigen Ausführungsbeispielen kann es sich bei der Kommunikationsschnittstelle alternativ oder zusätzlich um eine drahtgebundene Schnittstelle, zum Beispiel um einen universellen, seriellen Bus (englisch Universal-Serial-Bus, kurz USB) oder um einen drahtgebundenen Netzwerkanschluss, wie einen Ethernetanschluss, handeln.

Darüber hinaus umfasst das Infotainmentsystem eine Analyseeinrichtung, mittels welcher überprüft werden kann, ob die an das Infotainmentsystem übermittelten Daten Funktionen des Infotainmentsystems zugeordnet werden können. Bei dieser Analyseeinrichtung kann es sich beispielsweise um eine zentrale Recheneinheit (englisch Central Processing Unit, CPU) handeln, welche mit einer Software für die durchzuführende Überprüfung ausgestattet sein kann. Weitere Implementierungen der Analyseeinrichtung können anwendungsspezifische integrierte Schaltungen sein (englisch Application-Specific-Integrated-Circuit, kurz ASIC) und/oder Feld-Programmierbare-Logikgatter-Anordnungen (englisch Field-Programmable-Gate-Array, kurz FPGA), auf welchen die beschriebene Software installiert oder in welchen die durchzuführende Überprüfung in Hardware realisiert ist.

Außerdem umfasst das Infotainmentsystem von möglichen Ausführungsformen eine Ausgabeschnittstelle, die ausgebildet ist, diejenigen Funktionen, denen die Daten zugeordnet werden können, einem Nutzer zur Verwendung anzubieten. Bei dieser Ausgabeschnittstelle kann es sich zum Beispiel, wie weiter oben bereits beschrieben, um eine Anzeigeeinrichtung für Text- und andere visuelle Darstellungsformen, wie insbesondere ein LCD, und oder um eine Sprach- und/oder Tonerzeugungseinrichtung, wie zum Beispiel Audioverstärker und Lautsprecher, handeln.

Besonders bevorzugt bezieht sich die vorliegende Erfindung auf ein Kfz, welches mit einem wie oben beschriebenen Infotainmentsystem ausgestattet ist.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Figur 1: ein Flussdiagramm eines Ausführungsbeispiels eines Verfahrens zum Auswählen einer Funktion eines Infotainmentsystems eines Kraftfahrzeuges;
- Figur 2: ein Blockdiagramm eines Ausführungsbeispiels einer Vorrichtung in einem Kfz zum Auswählen einer Funktion eines Infotainmentsystems.

Verschiedene Ausführungsbeispiele werden nun ausführlicher unter Bezugnahme auf die beiliegenden Zeichnungen beschrieben, in denen einige Ausführungsbeispiele dargestellt sind.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

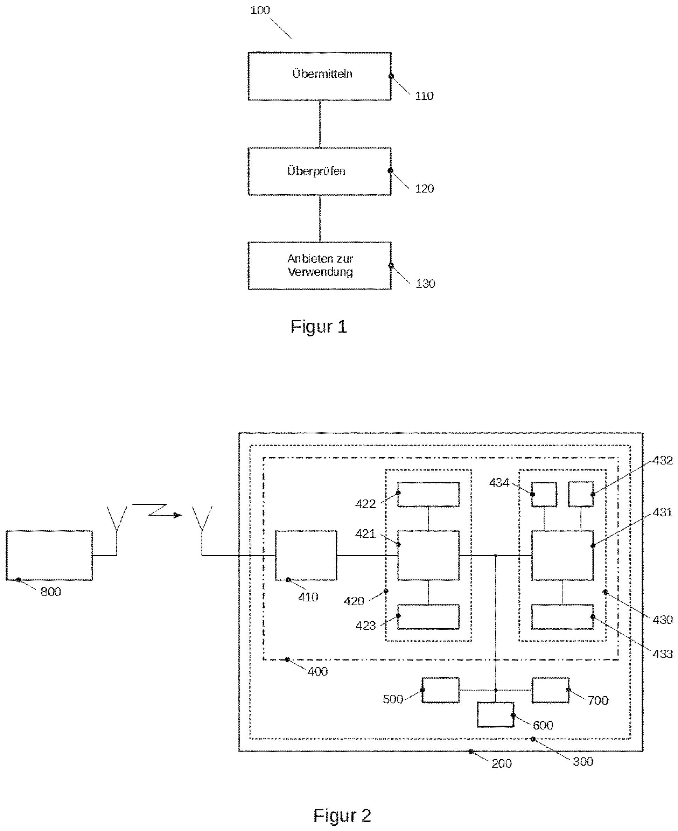

Figur 1 illustriert ein Verfahren 100 und Figur 2 eine Vorrichtung 400 zum Auswählen einer Funktion eines Infotainmentsystems 300 eines Kraftfahrzeuges 200.

Das Verfahren 100 beginnt mit einem Übermitteln 110 von Daten an das Infotainmentsystem 300. Die Daten können dabei zum Beispiel von einem mobilen Endgerät 800 übermittelt werden. Bei dem mobilen Endgerät 800 kann es sich zum Beispiel um ein Smartphone, einen Laptop oder einen Tablet-PC handeln. Es sei jedoch darauf hingewiesen, dass über dieses hier dargestellte Ausführungsbeispiel hinaus, Daten an das Infotainmentsystem 300 auch beispielsweise über eine Internetverbindung oder durch Auslesen eines NFC-Etikettes oder eines QR-Codes übermittelt werden können. Zum Empfangen der übermittelten Daten, umfasst die Vorrichtung 400 eine Kommunikationsschnittstelle 410, zum Beispiel für WLAN, Bluetooth oder NFC. Bei Verwendung von Bluetooth zum Übermitteln 110 der Daten kann das mobile Endgerät 800 zum Beispiel ein Objekt-Austausch-Protokoll (englisch Object-Exchange-Protocol, kurz OBEX-Protokoll) nutzen.

Nach Übermitteln 110 der Daten können diese von der Kommunikationsschnittstelle 410 an eine Steuereinheit 421 der Analyseeinheit 420 zum Überprüfen 120 weitergeleitet werden. Bei der Steuereinheit 421 kann es sich zum Beispiel um eine CPU mit einer Software oder Firmware handeln, mit welcher überprüft werden kann, ob die übermittelten Daten Funktionen des Infotainmentsystems 300 zugeordnet werden können. In dem hier vorgestellten Ausführungsbeispiel umfasst das Infotainmentsystem 300 ein Telefon 500 für eine Telefoniefunktion, ein Navigationssystem 600 für eine Navigationsfunktion und ein Audiosystem 700 zur Nutzung von Audiofunktionen, zum Beispiel der Wiedergabe von Audiodaten oder Rundfunksendungen.

Handelt es sich bei den Daten zum Beispiel um Kontaktdaten, insbesondere um eine Adresse und/oder eine Telefonnummer, so werden diese häufig in Form einer digitalen Visitenkarte übermittelt 110. Digitale Visitenkarten werden oft in einem sogenannten vCard-Dateiformat (kurz für Versit-Karte, nach dem Herausgeber des Dateiformates Versit), auch als VCF-Dateiformat bezeichnet, dargestellt und übermittelt 110. Andere mögliche Dateiformate für Kontaktdaten beziehungsweise digitale Visitenkarten sind das Komma-getrennte-Werte-Dateiformat (englisch für Comma-Separated-Values, CSV-Dateiformat) und das Textdateiformat, kurz TXT-Format.

Ferner können Kontaktdaten in Dateien digitaler Kalender, zum Beispiel im iCalender-Dateiformat, enthalten sein.

Auch können Daten, insbesondere Telefonnummern, Adressen oder geografische Koordinaten, durch einen Uniform Resource Identifiers (englisch für "einheitliche Bezeichner für Ressourcen", kurz URI) und/oder durch einen Uniform Resource Locators (englisch für "einheitlicher Ressourcenanzeiger", kurz URL) vom mobilen Endgerät 800 an das Infotainmentsystem 300 übermittelt werden 110. URIs und URLs werden häufig als Datenformat zum Übermitteln 110 von Daten über eine NFC-Verbindung von mobilen Endgeräten 800 oder NFC-Etiketten genutzt.

Zusätzlich kann ein URL einer Internetseite zugeordnet sein, wobei die Internetseite zum Beispiel eine Karte mit einem darin markierten Ziel und/oder eine Telefonnummer umfassen kann, so dass in dem URL Informationen bezüglich des markierten Ziels beziehungsweise der Telefonnummer enthalten sein können. Der URL kann somit zum Übermitteln 110 des markierten Ziels beziehungsweise der Telefonnummer an das Infotainmentsystem 300 genutzt werden.

Die Steuereinheit 421 kann nun anhand des Datei- beziehungsweise des Datenformats und/oder anhand des Datei- beziehungsweise des Dateninhalts überprüfen 120, ob die übermittelten Daten Funktionen des Infotainmentsystems 300 zugeordnet werden können. Zum Beispiel können vCard-Dateien ein Feld mit dem Kennzeichner "TEL" für eine Telefonnummer und/oder ein Feld mit dem Kennzeichner "ADR" für eine Adresse, ein URI oder ein URL zum Beispiel einen Kennzeichner "geo" gefolgt von einem geografischen Ort enthalten, welche von der Steuereinheit 421 ausgelesen werden können. Solche in URIs beziehungsweise in URLs enthaltene Kennzeichner werden gemeinsam mit den von ihnen beschriebenen geografischen Orten auch als Geotag oder Webtag (aus dem Englischen "tag" für Anhänger) bezeichnet.

Enthalten beispielsweise in Form einer digitalen Visitenkarte übermittelte Daten eine Telefonnummer und eine Adresse, so werden diese von der Steuereinheit 421 ausgelesen und einem Nutzer eine Telefonie- und eine Navigationsfunktion zur Verwendung angeboten 130. Insbesondere werden in einigen Ausführungsbeispielen ein Anruf eines der Telefonnummer zugeordneten Anschlusses über das Telefon 500 und eine Navigation zu der Adresse mittels eines Navigationssystems 600 angeboten 130. Die Telefonnummer und die Adresse können damit von der Steuereinheit 421 aus den übermittelten 110 Daten extrahiert und als Parameter an die zur Verwendung anzubietenden Funktionen übergeben werden. Bei dem Telefon 500 und/oder bei dem Navigationssystem 600 kann es sich entweder um ein in das Infotainmentsystem 300 integriertes Telefon bzw. Navigationssystem oder um mit diesem verbindbare externe Geräte handeln.

Um dem Nutzer die Funktionen zur Verwendung anzubieten 130, kann die Steuereinheit 421 den Funktionen zugeordnete Signale an ein Kontrollmodul 431 einer Ausgabeschnittstelle 430 der Vorrichtung 400 senden. Anschließend kann das Kontrollmodul 431, zum Beispiel eine Grafikkarte, ein Grafikprozessor, ein Video-Display-Controller, eine Soundkarte oder ein Soundprozessor, den Funktionen und gegebenenfalls ihren Parametern zugeordnete Texte, bildliche Darstellungen und/oder Sprache auf einer von der Ausgabeschnittstelle 430 umfassten Anzeigeeinrichtung 432, zum Beispiel einem LCD, beziehungsweise über eine von ihr umfasste Spracherzeugungseinrichtung 433, zum Beispiel Audioverstärker und Lautsprecher, ausgeben. Darauf kann der Nutzer über eine, in diesem Ausführungsbeispiel mit dem Kontrollmodul 431 verbundene Eingabeeinrichtung 434, zum Beispiel eine Tastatur, ein Drehschalter und/oder eine Bestätigungstaste, den einer Funktion und gegebenenfalls ihren Parametern zugeordneten Text beziehungsweise eine ihr zugeordnete bildliche Darstellung auswählen, das heißt markieren, und die Auswahl über einen Tastendruck bestätigen. Alternativ oder zusätzlich kann bei einer sprachlichen Ausgabe der Nutzer eine Auswahl einer Funktion durch einen Tastendruck, zum Beispiel durch Benutzung einer Bestätigungstaste, während eine Funktion genannt wird, oder durch eine Eingabe einer der Funktion zugeordneten Ziffer, durchführen.

Nach Auswahl einer Funktion durch den Nutzer kann die Eingabeeinrichtung 434 beziehungsweise das Kontrollmodul 431 ein der Auswahl entsprechendes Signal erzeugen und dieses an die Steuereinheit 421 senden. Infolgedessen kann die Steuereinheit 421 eine Ausführung der Funktion vom Infotainmentsystem 300, zum Beispiel durch das Telefon 500, das Navigationssystem 600 oder das Audiosystem 700, veranlassen.

Die Analyseeinheit 420 kann darüber hinaus einen flüchtigen Speicher 422, zum Beispiel einen Direktzugriffsspeicher (englisch Random-Access-Memory, kurz RAM), und einen nichtflüchtigen Speicher 423, zum Beispiel eine SSD, umfassen. Beispielhaft werde im Folgenden von einem RAM 422 und einer SSD 423 ausgegangen. Da bei der Analyse der Daten die Steuereinheit 421 überprüft, ob die Daten Funktionen des Infotainmentsystems 300 zugeordnet werden können, überprüft sie auch, welche Teile der übermittelten Daten und wie diese vom Infotainmentsystem 300 genutzt werden können.

Enthält zum Beispiel eine übermittelte digitale Visitenkarte neben einer Telefonnummer und einer Adresse auch ein Foto und/oder ein Logo, welche in der Regel wesentlich mehr Speicherplatz als die Telefonnummer und die Adresse erfordern, so kann die Steuereinheit 421, zum Beispiel durch eine Voreinstellung des Benutzers oder des Herstellers, so konfiguriert sein, dass sie zum Beispiel nur die Telefonnummer, die Adresse und einen diesen zugeordneten Namen aus der digitalen Visitenkarte auf der SSD 423 speichert und somit die SSD 423 durch Verwerfen des Fotos beziehungsweise des Logos schonen und den Speicherbedarf gering halten kann. Zusätzlich oder alternativ kann die Steuereinheit 421 dazu konfiguriert sein, die beispielsweise übermittelte digitale Visitenkarte nur im RAM 422 zwischenzuspeichern und nach Anbieten und Ausführen einer Funktion, zum Beispiel eines Telefonanrufes, wieder zu verwerfen, so dass keine Schreiboperationen auf der SSD 423 durchgeführt werden müssen.

Ferner kann die Steuereinheit 421 dazu ausgebildet sein, beim Übermitteln 110 der Daten einen aktiven Betriebsmodus des Infotainmentsystems 300 zu überprüfen. Verschiedene Betriebsmodi können zum Beispiel einen Telefonmodus, einen Navigations- und Kartenmodus, einen Wiedergabemodus von Rundfunksendungen und Audiodaten oder einen Grundmodus, welcher zum Beispiel einem Hauptmenü des Infotainmentsystems 300 entsprechen kann, umfassen. Infolgedessen kann je nach aktivem Betriebsmodus die Steuereinheit 421 eine Funktion, welche der aktive Betriebsmodus aufweist, bevorzugt oder ausschließlich dem Nutzer über die Ausgabeschnittstelle 430 zur Verwendung anbieten 130.

In der von der Steuereinheit 421 umfassten Software beziehungsweise Firmware kann dieses bevorzugte beziehungsweise ausschließliche Anbieten 130 einer Funktion, welche der aktuelle Betriebsmodus aufweist, zum Beispiel mit Hilfe eines Zustandsautomaten realisiert sein. Dabei kann dem aktuellen Betriebsmodus ein sogenannter Interaktionsstatus zugeordnet sein. Der Interaktionsstatus kann zum Beispiel in Form einer Variablen in der Software beziehungsweise der Firmware implementiert sein. Die Software beziehungsweise Firmware kann dann den Interaktionsstatus abfragen, um über diesen auf den aktuellen Betriebsmodus schließen und beim Übermitteln 110 von Daten an das Infotainmentsystem 300 eine Funktion bevorzugt beziehungsweise ausschließlich anbieten 130 zu können, welche der aktuelle Betriebsmodus aufweist. Wird der Betriebsmodus durch eine Interaktion zum Beispiel durch eine Eingabe des Nutzers an der Eingabeeinrichtung 434 geändert, so ändert sich der Interaktionsstatus entsprechend. Dies sei im Folgenden anhand einiger Beispiele dargestellt:
Handelt es sich bei dem aktiven Betriebsmodus zum Beispiel um den Telefonmodus, so kann die Steuereinheit 421 dies über den Interaktionsstatus erkennen. Wird nun beispielsweise eine digitale Visitenkarte, welche eine Adresse und eine Telefonnummer enthält, an das Infotainmentsystem 300 übermittelt 110, so überprüft 120 die Steuereinheit 421 diese Daten und kann ihnen sowohl eine Navigationsfunktion als auch eine Telefoniefunktion zuordnen. Infolge des erkannten Telefonmodus kann die Vorrichtung 400 nun jedoch bevorzugt oder ausschließlich einen Telefonanruf eines der Telefonnummer zugeordneten Anschlusses dem Nutzer zur Verwendung anbieten 130.

Wird nur eine Telefonnummer, zum Beispiel in einer digitalen Visitenkarte oder in einem URI, an das Infotainmentsystem 300 übermittelt 110, so können diese übermittelten Daten beim Überprüfen 120 durch die Steuereinheit 421 nur der Telefoniefunktion zugeordnet werden. Unabhängig vom Betriebsmodus, dieser könnte neben dem Telefonmodus auch der Navigations- und Kartenmodus oder der Grundmodus sein, kann nun die Vorrichtung 400 bevorzugt oder ausschließlich einen Telefonanruf eines der Telefonnummer zugeordneten Anschlusses dem Nutzer zur Verwendung anbieten 130.

In einem weiteren Beispiel handele es sich bei den übermittelten Daten um eine digitale Visitenkarte oder um einen URI oder URL, die beziehungsweise der nur eine Adresse enthält, und bei dem aktiven Betriebsmodus um den Telefonmodus. Die Steuereinheit 421 kann nun anhand des Interaktionsstatus feststellen, dass der Telefonmodus aktiv ist und dass die übermittelten Daten jedoch nicht einer Telefoniefunktion, sondern nur einer Navigationsfunktion zugeordnet werden können. Infolgedessen kann die Vorrichtung 400 bevorzugt oder ausschließlich eine Navigation zu der Adresse anbieten. Bestätigt der Nutzer die angebotene Navigationsfunktion, so kann die Vorrichtung 400 beziehungsweise deren Steuereinheit 421 den aktuellen Betriebsmodus und den an diesen gekoppelten Interaktionsstatus auf den Navigations- und Kartenmodus ändern.

Entsprechend kann bei aktiven Navigations- und Kartenmodus beim Übermitteln 110 von Daten, wie zum Beispiel einer digitalen Visitenkarte, einem URI oder einem URL, die beispielsweise eine Adresse und eine Telefonnummer oder nur eine Adresse enthalten, die Vorrichtung 400 bevorzugt oder ausschließlich eine Navigation zu der Adresse dem Nutzer zur Verwendung anbieten 130.

Handelt es sich bei aktiven Navigations- und Kartenmodus hingegen beispielsweise um eine digitale Visitenkarte oder um einen URI, die beziehungsweise der nur eine Telefonnummer enthält, so kann die Vorrichtung 400 bevorzugt oder ausschließlich einen Telefonanruf eines der Telefonnummer zugeordneten Anschlusses anbieten. Bestätigt der Nutzer die Verwendung der Telefoniefunktion, so kann die Vorrichtung 400 beziehungsweise deren Steuereinheit 421 den aktuellen Betriebsmodus und den an diesen gekoppelten Interaktionsstatus auf den Telefonmodus ändern.

In einem nächsten Beispiel befinde sich das Infotainmentsystem 300 in einem sonstigen Betriebsmodus, wie dem Grundmodus. Außerdem werde eine digitale Visitenkarte mit einer Adresse und einer Telefonnummer übermittelt 110. Die Vorrichtung 400 kann nun sowohl eine Navigation an die Adresse als auch einen Telefonanruf eines der Telefonnummer zugeordneten Anschlusses dem Nutzer zur Verwendung anbieten 130. Dabei kann die Vorrichtung 400 durch eine Voreinstellung so konfiguriert sein, dass eine der Funktionen bevorzugt oder ausschließlich angeboten werden kann 130.

Enthalten die in einem sonstigen Betriebsmodus übermittelten Daten nur eine Telefonnummer, so kann die Vorrichtung 400 bevorzugt oder ausschließlich einen Telefonanruf eines der Telefonnummer zugeordneten Anschlusses anbieten. Enthalten sie hingegen nur eine Adresse oder geografische Koordinaten, so kann die Vorrichtung 400 bevorzugt oder ausschließlich eine Navigation zu der Adresse beziehungsweise an einen den geografischen Koordinaten zugeordneten Ort anbieten 130.

Neben den in diesen Beispielen beschriebenen Funktionen, welche bevorzugt angeboten werden können, können von der Vorrichtung 400 weitere Funktionen dem Nutzer zur Verwendung angeboten werden 130. Diese können insbesondere ein Speichern der übermittelten Daten auf der SSD 423 und/oder ein Zwischenspeichern im RAM 422 umfassen.

Ein weiteres Ausführungsbeispiel eines Infotainmentsystem für ein Kraftfahrzeug umfasst eine Kommunikationsschnittstelle, die ausgebildet ist, um Daten zu empfangen; eine Analyseeinrichtung, die ausgebildet ist, um zu überprüfen, ob die an das Infotainmentsystem übermittelten Daten Funktionen des Infotainmentsystems zugeordnet werden können; und eine Ausgabeschnittstelle, die ausgebildet ist, diejenigen Funktionen, denen die Daten zugeordnet werden können, zur Verwendung anzubieten. Dabei ist die Kommunikationsschnittstelle optional dazu ausgebildet, Daten über eine drahtlose Kommunikationsverbindung, wie zum Beispiel über NFC oder Bluetooth, zu empfangen.

Ein weiteres Ausführungsbeispiel ist ein Kraftfahrzeug mit einem derartigen Infotainmentsystem.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

### Bezugszeichenliste

- 100: Verfahren zum Auswählen einer Funktion eines Infotainmentsystems eines Kraftfahrzeuges
- 110: Übermitteln
- 120: Überprüfen
- 130: Anbieten zur Verwendung
- 200: Kraftfahrzeug
- 300: Infotainmentsystem
- 400: Vorrichtung zum Auswählen einer Funktion eines Infotainmentsystems eines Kraftfahrzeuges
- 410: Kommunikationsschnittstelle
- 420: Analyseeinheit
- 421: Steuereinheit
- 422: Flüchtiger Speicher beziehungsweise RAM
- 423: Nichtflüchtiger Speicher beziehungsweise SSD
- 430: Ausgabeschnittstelle
- 431: Kontrollmodul
- 432: Anzeigeeinrichtung
- 433: Spracherzeugungseinrichtung
- 434: Eingabeeinrichtung
- 500: Telefon
- 600: Navigationssystem
- 700: Audiosystem
- 800: Mobiles Endgerät

## Patentansprüche

1. Verfahren (100) zum Auswählen einer Funktion eines Infotainmentsystems (300) eines Kraftfahrzeuges (200), umfassend:
Übermitteln (110) von Daten zu dem Infotainmentsystem (300);
Überprüfen (120) am Infotainmentsystem (300), ob die übermittelten Daten Funktionen des Infotainmentsystems (300) zugeordnet werden können; und,
sofern die Daten Funktionen des Infotainmentsystems (300) zugeordnet werden können,
Anbieten (130) derjenigen Funktionen zur Verwendung, denen die Daten zugeordnet werden können,
wobei das Infotainmentsystem (300) wenigstens zwei Betriebsmodi umfasst und jeder Betriebsmodus wenigstens eine Funktion aufweist, ferner umfassend:
Bevorzugtes Anbieten (130) derjenigen Funktionen zur Verwendung, welche ein beim Übermitteln (110) der Daten aktiver und/oder ein vorbestimmter Betriebsmodus aufweist.

2. Verfahren (100) nach Anspruch 1, wobei beim Anbieten (110) der Funktionen zur Verwendung aus den übermittelten Daten extrahierte Informationen als Parameter an die anzubietenden Funktionen gekoppelt sind.

3. Verfahren (100) nach einem der vorhergehenden Ansprüche, wobei die bevorzugt zur Verwendung anzubietenden Funktionen markiert sind und/oder zuerst genannt werden und die übrigen anzubietenden Funktionen unmarkiert und/oder nach den bevorzugt anzubietenden Funktionen genannt werden.

4. Verfahren (100) nach einem der vorhergehenden Ansprüche, wobei das Anbieten (130) der Funktionen zur Verwendung eine Anzeige von den Funktionen zugeordneten Texten und/oder den Funktionen zugeordneten visuellen Darstellungen auf einer Anzeigeeinrichtung (432) umfasst.

5. Verfahren (100) nach einem der vorhergehenden Ansprüche, wobei das Anbieten (130) der Funktionen zur Verwendung eine Ausgabe von den Funktionen zugeordneter Sprache über eine Spracherzeugungseinrichtung (433) umfasst.

6. Verfahren (100) nach einem der vorhergehenden Ansprüche, wobei, sofern die übermittelten Daten Kontaktdaten, insbesondere eine Adresse und/oder eine Telefonnummer, umfassen, die zur Verwendung anzubietenden Funktionen eine Navigation an die Adresse beziehungsweise einen Telefonanruf eines der Telefonnummer zugeordneten Anschlusses umfassen.

7. Verfahren (100) nach einem der vorhergehenden Ansprüche zum Auswählen einer Funktion eines Infotainmentsystems (300) eines Kraftfahrzeuges (200), ferner umfassend:
Ausführen der angebotenen Funktionen.

8. Verfahren (100) zum Auswählen einer Funktion eines Infotainmentsystems (300) eines Kraftfahrzeuges (200), umfassend:
Übermitteln (110) von Daten zu dem Infotainmentsystem (300);
Überprüfen (120) am Infotainmentsystem (300), ob die übermittelten Daten Funktionen des Infotainmentsystems (300) zugeordnet werden können; und,
sofern die Daten Funktionen des Infotainmentsystems (300) zugeordnet werden können,
Anbieten (130) derjenigen Funktionen zur Verwendung, denen die Daten zugeordnet werden können,
wobei das Infotainmentsystem (300) wenigstens zwei Betriebsmodi umfasst und jeder Betriebsmodus wenigstens eine Funktion aufweist, ferner umfassend:
Ausschließliches Anbieten (130) der Funktionen zur Verwendung, welche ein beim Übermitteln (110) der Daten aktiver und/oder ein vorbestimmter Betriebsmodus aufweist.

9. Infotainmentsystem (300) für ein Kraftfahrzeug (200), folgendes umfassend:
eine Kommunikationsschnittstelle (410), die ausgebildet ist, um Daten zu empfangen;
eine Analyseeinrichtung (420), die ausgebildet ist, um zu überprüfen (120), ob die an das Infotainmentsystem (300) übermittelten Daten Funktionen des Infotainmentsystems (300) zugeordnet werden können; und
eine Ausgabeschnittstelle (430), die ausgebildet ist, diejenigen Funktionen, denen die
Daten zugeordnet werden können, zur Verwendung anzubieten (130), wobei das Infotainmentsystem (300) wenigstens zwei Betriebsmodi umfasst und jeder Betriebsmodus wenigstens eine Funktion aufweist, ferner umfassend:
wobei diejenigen Funktionen bevorzugt zur Verwendung angeboten (130) werden, welche ein beim Übermitteln (110) der Daten aktiver und/oder ein vorbestimmter Betriebsmodus aufweist.

## Claims

1. Method (100) for selecting a function of an infotainment system (300) of a motor vehicle (200), comprising:
transmitting (110) data to the infotainment system (300);
checking (120) at the infotainment system (300) whether the transmitted data can be assigned to functions of the infotainment system (300); and,
insofar as the data can be assigned to functions of the infotainment system (300),
offering (130) those functions for use to which the data can be assigned,
wherein the infotainment system (300) comprises at least two operating modes, and each operating mode has at least one function, further comprising:
preferably offering (130) those functions for use which, when transmitting (110) the data, an active and/or a predetermined operating mode has.

2. Method (100) according to claim 1, wherein, when offering (110) the functions for use, information extracted from the transmitted data is coupled as parameters to the functions to be offered.

3. Method (100) according to one of the preceding claims, wherein the functions to be preferably offered for use are marked and/or mentioned first, and the remaining functions to be offered are unmarked and/or mentioned after the functions to be preferably offered.

4. Method (100) according to one of the preceding claims, wherein offering (130) the functions for use comprises displaying texts associated with the functions and/or visual representations associated with the functions on a display device (432).

5. Method (100) according to one of the preceding claims, wherein offering (130) the functions for use comprises outputting speech associated with the functions via a speech generation device (433).

6. Method (100) according to one of the preceding claims, wherein, if the transmitted data comprise contact data - in particular, an address and/or a telephone number - the functions to be offered for use comprise a navigation to the address or a telephone call of a connection assigned to the telephone number.

7. Method (100) according to one of the preceding claims for selecting a function of an infotainment system (300) of a motor vehicle (200), further comprising:
executing the functions offered.

8. Method (100) for selecting a function of an infotainment system (300) of a motor vehicle (200), comprising:
transmitting (110) data to the infotainment system (300);
checking (120) at the infotainment system (300) whether the transmitted data can be assigned to functions of the infotainment system (300); and,
insofar as the data can be assigned to functions of the infotainment system (300),
offering (130) those functions for use to which the data can be assigned,
wherein the infotainment system (300) comprises at least two operating modes, and each operating mode has at least one function, further comprising:
exclusively offering (130) the functions for use which, when transmitting (110) the data, an active and/or a predetermined operating mode has.

9. Infotainment system (300) for a motor vehicle (200), comprising the following:
a communications interface (410) configured to receive data;
an analysis device (420) designed to check (120) whether the data transmitted to the infotainment system (300) can be assigned to functions of the infotainment system (300); and
an output interface (430) designed to offer (130) those functions for use to which the data can be assigned,
wherein the infotainment system (300) comprises at least two operating modes, and each operating mode has at least one function, further comprising:
wherein those functions are preferably offered for use (130) which, when transmitting (110) the data, an active and/or a predetermined operating mode has.

## Revendications

1. Procédé (100) de sélection d'une fonction d'un système d'info-divertissement (300) d'un véhicule automobile (200), comprenant :
la transmission (110) de données au système d'info-divertissement (300) ;
la vérification (120), sur le système d'info-divertissement (300), de si les données transmises peuvent être associées à des fonctions du système d'info-divertissement (300) ; et,
si les données peuvent être associées à des fonctions du système d'info-divertissement (300),
la mise à disposition (130), en vue de leur utilisation, des fonctions auxquelles les données peuvent être associées,
le système d'info-divertissement (300) comprenant au moins deux modes de fonctionnement et chaque mode de fonctionnement présentant au moins une fonction, comprenant en outre :
la mise à disposition (130) préférentielle, en vue de leur utilisation, des fonctions qui présentent un mode de fonctionnement actif lors de la transmission (110) des données et/ou prédéfini.

2. Procédé (100) selon la revendication 1, dans lequel, lors de la mise à disposition (110), en vue de leur utilisation, des fonctions, des informations extraites des données transmises sont couplées comme paramètres aux fonctions à mettre à disposition.

3. Procédé (100) selon l'une quelconque des revendications précédentes, dans lequel les fonctions à mettre à disposition de préférence en vue de leur utilisation sont marquées et/ou nommées les premières et les fonctions restantes à mettre à disposition sont non marquées et/ou nommées après les fonctions à mettre à disposition de préférence.

4. Procédé (100) selon l'une quelconque des revendications précédentes, dans lequel la mise à disposition (130), en vue de leur utilisation, des fonctions comprend un affichage de textes associés aux fonctions et/ou de représentations visuelles associées aux fonctions sur un dispositif d'affichage (432).

5. Procédé (100) selon l'une quelconque des revendications précédentes, dans lequel la mise à disposition (130), en vue de leur utilisation, des fonctions comprend une sortie de paroles associées aux fonctions par le biais d'un dispositif de synthèse vocale (433).

6. Procédé (100) selon l'une quelconque des revendications précédentes, dans lequel, si les données transmises comprennent des données de contact, en particulier une adresse et/ou un numéro de téléphone, les fonctions à mettre à disposition en vue de leur utilisation comprennent une navigation jusqu'à l'adresse ou un appel téléphonique d'une ligne associée au numéro de téléphone.

7. Procédé (100) de sélection d'une fonction d'un système d'info-divertissement (300) d'un véhicule automobile (200), selon l'une quelconque des revendications précédentes, comprenant en outre :
l'exécution des fonctions mises à disposition.

8. Procédé (100) de sélection d'une fonction d'un système d'info-divertissement (300) d'un véhicule automobile (200), comprenant :
la transmission (110) de données au système d'info-divertissement (300) ;
la vérification (120), sur le système d'info-divertissement (300), de si les données transmises peuvent être associées à des fonctions du système d'info-divertissement (300) ; et,
si les données peuvent être associées à des fonctions du système d'info-divertissement (300),
la mise à disposition (130), en vue de leur utilisation, des fonctions auxquelles les données peuvent être associées,
le système d'info-divertissement (300) comprenant au moins deux modes de fonctionnement et chaque mode de fonctionnement présentant au moins une fonction, comprenant en outre :
la mise à disposition (130) exclusive, en vue de leur utilisation, des fonctions qui présentent un mode de fonctionnement actif lors de la transmission (110) des données et/ou prédéfini.

9. Système d'info-divertissement (300) pour un véhicule automobile (200), comprenant :
une interface de communication (410), qui est conçue pour recevoir des données ;
un dispositif d'analyse (420), qui est conçu pour vérifier (120) si les données transmises au système d'info-divertissement (300) peuvent être associées à des fonctions du système d'info-divertissement (300) ; et
une interface de sortie (430), qui est conçue pour mettre à disposition (130), en vue de leur utilisation, les fonctions auxquelles les données peuvent être associées,
le système d'info-divertissement (300) comprenant au moins deux modes de fonctionnement et chaque mode de fonctionnement présentant au moins une fonction, comprenant en outre :
les fonctions qui présentent un mode de fonctionnement actif lors de la transmission (110) des données et/ou prédéfini étant mises à disposition (130) de préférence en vue de leur utilisation.
